# EUROPÄISCHE PATENTSCHRIFT

(11) **EP 1 954 962 B1**
(45) Veröffentlichungstag und Bekanntmachung des Hinweises auf die Patenterteilung: **27.07.2011**
(21) Anmeldenummer: 06819289.7
(22) Anmeldetag: 07.11.2006
(51) Int. Cl.: F16H 55/08, F16H 35/02, F01L 1/02

(54) **UMSCHLINGUNGSTRIEB**
BELT DRIVE
MÉCANISME D'ENTRAÎNEMENT À COURROIE

(30) Priorität: 23.11.2005 DE 102005055716
(43) Veröffentlichungstag der Anmeldung: 13.08.2008
(73) Patentinhaber: Schaeffler Technologies GmbH & Co. KG, 91074 Herzogenaurach (DE)
(72) Erfinder: KERN, Roman, 91301 Forchheim (DE); PFLUG, Rainer, Heilsbronn (DE)
(86) Internationale Anmeldenummer: PCT/EP2006/068168
(87) Internationale Veröffentlichungsnummer: WO 2007/060090

(56) Entgegenhaltungen:
- WO-A-03/046413
- DE-A1- 19 520 508
- DE-U1- 20 319 172
- US-A- 3 583 250
- US-A1- 2003 104 886

## Beschreibung

### Gebiet der Erfindung

Die Erfindung betrifft einen Umschlingungstrieb umfassend ein Umschlingungsmittel wie einen Riemen oder eine Kette und mehrere im Trieb integrierte, vom Umschlingungsmittel umschlungene, auf Wellen sitzende Räder, wobei über wenigstens eine Welle Störschwingungen in den Umschlingungstrieb eingebracht werden, und wobei zur Erzeugung einer Gegenschwingung wenigstens ein Rad eine unrunde Form aufweist.

### Hintergrund der Erfindung

Solche Umschlingungstriebe kommen üblicherweise bei Brennkraftmaschinen vornehmlich im Kraftfahrzeugbereich zum Einsatz. Der Trieb wird üblicherweise über ein auf einer Kurbelwelle aufsitzendes Rad angetrieben. Über das Zugmittel, z. B. einen Riemen, werden beispielsweise eine oder mehrere Nockenwellen, auf denen ebenfalls entsprechende Triebräder sitzen, angetrieben, wie auch weitere Zusatzaggregate wie z. B. eine Wasserpumpe, ein Klimakompressor etc. über entsprechende Räder in den Trieb eingebunden und über diesen angetrieben werden können.

Aufgrund des Betriebs der Brennkraftmaschine, bei der es sich üblicherweise um eine Kolbenmaschine handelt, werden über die Kurbelwelle Schwingungen in den Trieb eingetragen, das heißt, das Umschlingungsmittel wie beispielsweise der Riemen erfährt aufgrund von Drehungleichförmigkeiten, Drehmomentsschwankungen oder Winkelgeschwindigkeitsänderungen eine Schwingungsanregung, was nachteilig ist und Lebensdauer verringernd sowie Wirkungsgrad beeinträchtigend ist. Neben über die Kurbelwelle eingetragenen Störschwingungen können beispielsweise auch über eine Nockenwelle Störschwingungen eingetragen werden. Die Nockenwelle treibt üblicherweise die Ventile an. Auch aus diesem Steuerbetrieb können bedingt durch den Ventiltrieb Drehungleichförmigkeiten und Drehmomentsschwankungen auf die Nockenwelle rückgekoppelt werden, die als Störschwingungen in den Umschlingungstrieb eingetragen werden können.

Dies führt letztlich dazu, dass der Umschlingungstrieb schwingt, wobei sich dabei üblicherweise ein charakteristisches Schwingungsmuster ausbildet.

Um diese Schwingungen zu reduzieren bzw. zu bedämpfen ist es beispielsweise aus DE 195 20 508 A1 bekannt, eines der im Trieb integrierten Räder, beispielsweise das Kurbelwellenrad, unrund, z. B. oval auszuformen. Aufgrund dieser unrunden Geometrie werden Gegenschwingungen erzeugt, nachdem diese unrunde Form eine definierte Längung und Verkürzung des Zugmittels pro Wellenumdrehung bewirkt. Diese Gegenschwingungen überlagern die eingetragenen Störschwingungen und reduzieren oder kompensieren diese.

Die Form des unrunden Rades wird dabei in Abhängigkeit einer zu bedämpfenden Hauptschwingungsordnung der überlagerten Störschwingungen gewählt. Die Störschwingungen setzen sich üblicherweise aus Einzelschwingungen unterschiedlicher Ordnungen zusammen, das heißt, das messbare Schwingungsspektrum kann in einzelne Hauptschwingungsordnungen aufgelöst werden. Mit bekannten unrunden Rädern wird nun gezielt eine Hauptschwingungsordnung bedämpft, um den Trieb zu beruhigen. Wenngleich dies zu einer beachtlichen Triebberuhigung führt, verbleiben dennoch stets Reststörschwingungen.

### Zusammenfassung der Erfindung

Der Erfindung liegt damit das Problem zugrunde, einen Umschlingungstrieb anzugeben, bei dem Mittel zur weitergehenden Triebberuhigung vorgesehen sind.

Zur Lösung dieses Problems ist bei einem Umschlingungstrieb der eingangs genannten Art erfindungsgemäß vorgesehen, dass das unrunde Rad in seiner Form derart ausgeführt ist, dass eine Gegenschwingung erzeugbar ist, die wenigstens zwei unterschiedliche Hauptschwingungsordnungen der Störschwingungen kompensiert.

Der Erfindung liegt die Überlegung zugrunde, über ein einziges unrund ausgeführtes Rad nicht nur eine Hauptschwingungsordnung der Störschwingung zu bedämpfen, sondern wenigstens zwei oder mehr. Es hat sich herausgestellt, dass bei Bedämpfung nur einer Hauptschwingungsordnung oder dominanten Schwingungsordnung nach wie vor Reststörschwingungen verbleiben, die aus den nicht bedämpften Schwingungskomponenten bestehen. Erfindungsgemäß wird nun das unrunde Rad in seiner Geometrie derart ausgelegt, dass wenigstens noch eine weitere Hauptschwingungsordnung der Störschwingungen bedämpft werden kann. Es wird also eine Gegenschwingung erzeugt, die sich aus zwei infolge der Radgeometrie definiert erzeugten Gegen-Hauptschwingungsordnungen, die einander überlagert werden, zusammensetzt, und die den entsprechenden Hauptschwingungsordnungen der Störschwingung entgegenwirkt und soweit als möglich kompensiert. Hierdurch kann unter Verwendung nur eines Rades eine deutlich weitergehende Triebberuhigung erreicht werden als bei bisher bekannten Trieben, bei denen über ein unrundes Rad lediglich eine Hauptschwingungsordnung der Störschwingung bedämpft wird.

Die Form des unrunden Rades wird erfindungsgemäß durch Überlagerung zweier unterschiedlicher, auf die zu kompensierenden Hauptschwingungsordnungen der Störschwingung bezogener Geometrien erhalten. Soll beispielsweise die dritte und die vierte Hauptschwingungsordnung oder dominante Schwingung der Störschwingung kompensiert werden, so wird zur Bestimmung der Radgeometrie eine dreieckige und eine viereckige Form überlagert. Die Überlagerung erfolgt dabei derart, dass die mit dem erhaltenen unrunden Rad erzeugte Gegenschwingung ein Schwingungsmuster zeigt, das dem Störschwingungsmuster entspricht, jedoch spiegelbildlich verläuft. Zu diesem Zweck ist es vorteilhaft, wenn die Radiusveränderungen am Rad, die über die Überlagerung bzw. Unrundheit gegeben sind, in Abhängigkeit der Amplitude der Störschwingung bestimmt sind. Hierüber wird sichergestellt, dass die Gegenschwingung von der Amplitude her der Störschwingung entspricht, so dass diese im günstigsten Fall annähernd vollständig ausgelöscht wird. Weiterhin ist es natürlich zweckmäßig, wenn die Form des Rades in Abhängigkeit der Phasenwinkel der Amplituden der zu kompensierenden Hauptschwingungsordnungen bestimmt ist, um sicherzustellen, dass bezogen auf die zu bedämpfende Störschwingung die Gegen-Hauptschwingungen auch phasenkorrekt bezogen auf die zu bedämpfenden Hauptschwingungen erzeugt werden.

Eine besonders zweckmäßige Erfindungsausgestaltung sieht schließlich vor, dass das Rad über den gesamten Umfang einen positiven Radius aufweist. Das heißt, die Geometrie wird so bestimmt bzw. durch Überlagerung der Einzelgeometrien derart ausgebildet, dass sich keine Einbuchtungen ergeben, in denen also ein negativer Radius vorliegt, und in welchen Bereichen das Zugmittel nicht am unrunden Rad angreift. Hierüber ist sichergestellt, dass das Zugmittel unabhängig von der Radstellung das Rad jeweils maximal möglich umschlingt und ein optimaler Momentenübertrag möglich ist.

### Kurze Beschreibung der Zeichnungen

Weitere Vorteile, Merkmale und Einzelheiten der Erfindung ergeben sich aus der nachfolgenden Beschreibung der Ausführungsbeispiele. Dabei zeigen:
- Fig. 1: eine Prinzipskizze eines erfindungsgemäßen Umschlingungs- triebs,
- Fig. 2: eine Prinzipdarstellung der über den Brennkraftmotor über die Kurbelwel- le eingetragenen Störschwingung bestehend exemplarisch aus der dritten und vierten Hauptschwingungsordnung,
- Fig. 3: ein Diagramm der beiden aufgelösten dritten und vierten Hauptschwin- gungsordnungen, die in Überlagerung die Störschwingungen ge- mäß Fig. 2 ergeben,
- Fig. 4: eine Prinzipdarstellung eines erfindungsgemäß geformten unrunden Ra- des zur Erzeugung von Gegenschwingungen zur Kompensation der dritten und vierten Hauptschwingungsordnung der Stör- schwingung aus Fig. 3,
- Fig. 5: die über das Rad gemäß Fig. 4 erzeugbare Gegenschwingung, exempla- risch lediglich dargestellt für die dritte und vierte Gegenschwin- gungs-Hauptordnung, und
- Fig. 6: die beiden aufgelösten dritten und vierten Gegenschwingungs- Hauptordnungen, die in Überlagerung zur Gegenschwingung ge- mäß Fig. 5 führen.

### Detaillierte Beschreibung der Zeichnungen

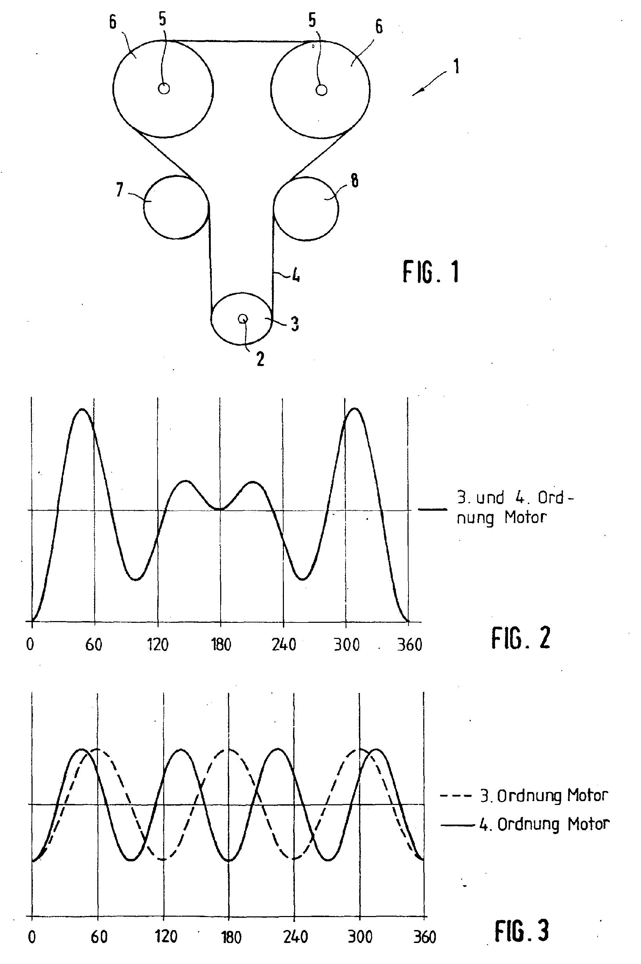

Fig. 1 zeigt in Form einer Prinzipdarstellung einen üblichen Umschlingungstriebs 1, wie beispielsweise bei einer Brennkraftmaschine eines Kraftfahrzeugmotors vorgesehen ist. Auf einer Kurbelwelle 2 sitzt ein erstes Rad 3, das von einem Zugmittel 4, bzw. einem Riemen oder einer Kette, umschlungen ist. Auf zwei Nockenwellen 5 sitzt jeweils ebenfalls ein Rad 6, ebenfalls vom Zugmittel 4 umschlungen. Weiterhin ist eine Spanneinrichtung 7 vorgesehen, bei der es sich um eine Spannrolle handeln kann, sofern es sich bei dem Zugmittel 4 um einen Riemen handelt. Handelt es sich bei dem Zugmittel 4 um eine Kette, so ist die Spanneinrichtung 7 als Spannschiene ausgebildet. Am gegenüberliegenden Trum des Zugmittels 4 ist eine Führungseinrichtung 8 vorgesehen, über die das Zugmittel 4 geführt ist. Bei einem Riemen handelt es sich bei der Führungseinrichtung 8 um eine Umlenkrolle, im Falle einer Kette um eine Führungsschiene. Der grundsätzliche Aufbau eines Umschlingungstriebs ist hinlänglich bekannt und bedarf keiner näheren Erläuterung.

Sowohl über die Kurbelwelle 2 als auch über die Nockenwellen 5 werden nun beim Betrieb Störschwingungen in den Umschlingungstrieb 1 bzw. das Zugmittel 4 eingekoppelt, die zu einer Schwingung des Zugmittels 4 führen. Die über die Kurbelwelle 2 eingekoppelten Störschwingungen resultieren aus dem Betrieb der Brennkraftmaschine, also des Motors selbst, letztlich resultierend aus der Kolbenbewegung. Die Störschwingungen, die über die Nockenwellen 5 eingetragen werden, resultieren aus dem Ventiltrieb, der über die Nockenwellen 5 erfolgt.

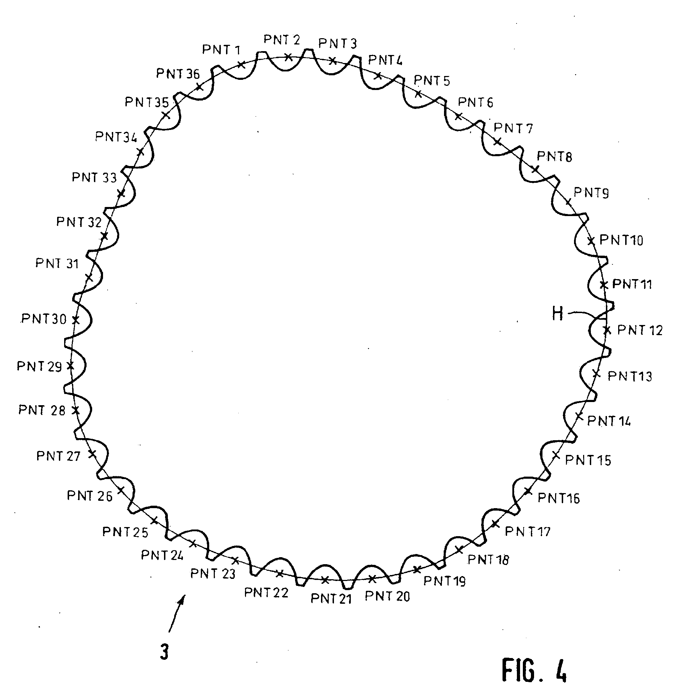

Zur Kompensation der Störschwingungen ist im gezeigten Ausführungsbeispiel das Rad 3 auf der Kurbelwelle 2 unrund ausgebildet, wobei dies exemplarisch durch eine ovale Form des Rades 3 dargestellt ist. Eine reale Form eines solchen Rades, wie es erfindungsgemäß ausgeführt ist, ist in Fig. 4 gezeigt, worauf nachfolgend noch eingegangen wird. Über dieses unrunde Rad können nun Gegenschwingungen erzeugt werden, die bewusst und aktiv in das Zugmittel 4 eingebracht werden, und die so ausgelegt sind, dass eine Bedämpfung der Störschwingungen erreicht wird.

Das Störschwingungsspektrum, wie es real in einem solchen Umschlingungstrieb vorliegt, kann gemessen werden, anhand des gemessenen Schwingungsverlaufs kann das Spektrum in die einzelnen Schwingungsanteile der verschiedenen Hauptschwingungsordnungen oder dominanten Schwingungen aufgelöst werden. Üblicherweise ist ein unrundes Rad zur Kompensation einer einzelnen Hauptschwingung ausgelegt. Das Störschwingungsspektrum setzt sich aber wie beschrieben aus mehreren dominanten Schwingungen oder Hauptschwingungsordnungen zusammen, so dass die Bedämpfung einer Hauptschwingung zwar eine Beruhigung mit sich bringt, jedoch nach wie vor eine Restschwingung verbleibt.

Fig. 2 zeigt als Prinzipdarstellung exemplarisch einen Störschwingungsverlauf, wobei diese Störschwingung im Ausführungsbeispiel aus den Hauptschwingungen dritter und vierter Ordnung, die hier überlagert sind, besteht. Diese Störschwingung wird über den Motor bzw. die Kurbelwelle in den Zug eingetragen.

Ersichtlich ergeben sich deutliche Schwingungsamplituden, mithin also Momenten- oder Kraftschwankungen im Zugmittel. Die Störschwingung, wie sie in Fig. 2 gezeigt ist, kann in die beiden Hauptschwingungsordnungen aufgelöst werden, wie in Fig. 3 gezeigt. Über die gestrichelte Linie ist die Hauptschwingung dritter Ordnung dargestellt, während die durchgezogene Linie die Hauptschwingung vierter Ordnung zeigt. Werden diese beiden Schwingungen einander überlagert, ergibt sich der in Fig. 2 gezeigte Störschwingungsverlauf.

Erfindungsgemäß wird nun unter Verwendung eines einzigen Rades sowohl die Hauptschwingung der dritten Ordnung als auch die Hauptschwingung der vierten Ordnung bedämpft. Zu diesem Zweck ist das unrunde Rad 3 derart in seiner Form bzw. Geometrie ausgebildet, dass Gegenschwingungen erzeugt werden, die - idealisiert für das vorliegende Ausführungsbeispiel - ein Schwingungsspektrum zeigen, das dem Spektrum gemäß Fig. 2 vom Amplitudenverlauf entgegengesetzt gerichtet ist, und das ebenfalls aus dominanten Gegenschwingungen dritter und vierter Ordnung gebildet ist. Ein solches Rad ist exemplarisch in Fig. 4 gezeigt. Dieses Rad ist ersichtlich nicht rund, es weist eine unregelmäßige Randform auf, die im gezeigten Beispiel durch Überlagerung einer dreieckigen und einer viereckigen Radgeometrie erhalten wird. Die dreieckige Radgeometrie dient zum Erzeugen von Gegenschwingungen dritter Ordnung, während die viereckige Radgeometrie zum Erzeugen von Gegenschwingungen vierter Ordnung dient. Die Überlagerung dieser Radgeometrien führt zu der in Fig. 4 gezeigten Radform, wobei im Rahmen der Überlagerung zum einen der Phasenwinkel, den die einzelnen Ordnungen bezüglich einander aufweisen, wie auch hinsichtlich der Radiusschwankungen die Amplituden der einzelnen Schwingungsordnungen berücksichtigt werden.

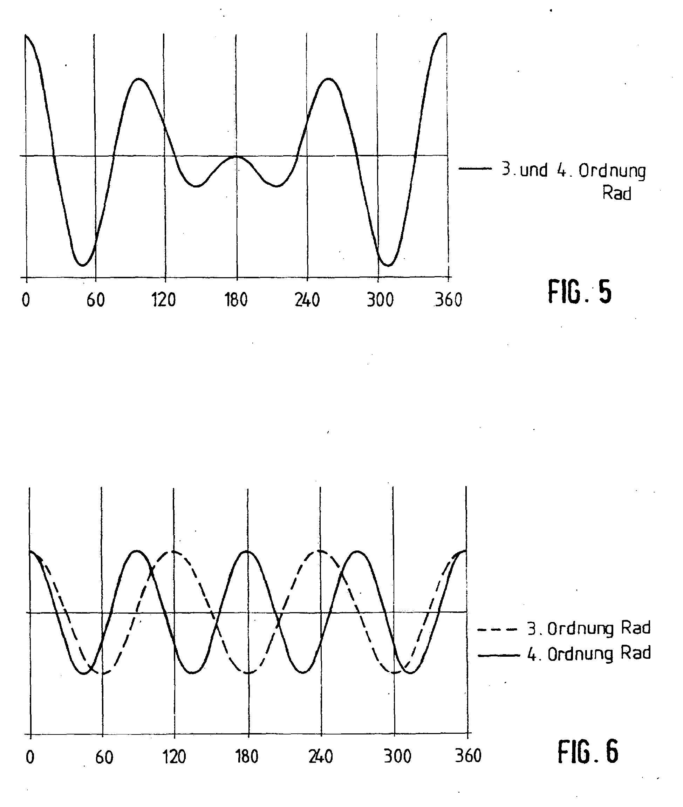

Mit dem Rad, wie in Fig. 4 gezeigt ist, lassen sich - natürlich neben Schwingungen auch anderer Ordnungen - eben insbesondere die Hauptschwingungen dritter und vierter Ordnung, wie sie in Fig. 6 gezeigt sind, erzeugen, die in Überlagerung zu dem Gegenschwingungsspektrum wie in Fig. 5 gezeigt führen, wobei auch dieses Gegenschwingungsspektrum bei dem idealisierten Ausführungsbeispiel lediglich aus diesen beiden Schwingungsordnungen erzeugt ist. Ersichtlich verläuft das Gegenschwingungsspektrum von der Amplitude her entgegengesetzt zum Störschwingungsspektrum gemäß Fig. 2, die Phase der einzelnen Amplituden ist jedoch übereinstimmend. Würden nun diese Gegenschwingung der Störschwingung überlagert, so käme es idealerweise zu einer völligen Schwingungsauslöschung.

Wie ausgeführt ist nun die Form des Rades 3, wie in Fig. 4 gezeigt, durch Überlagerung der beiden auf die zu kompensierenden Hauptschwingungsordnungen, nämlich hier die dritte und vierte Ordnung, bezogenen Geometrien (Dreieck und Viereck) unter Berücksichtigung der Amplituden und Phasenwinkel erhalten worden. Eine Referenzierung der einzelnen Radumfangsabschnitte des Rades gemäß Fig. 4 zu dem Gegenschwingungsspektrum gemäß Fig. 5 ist über die insgesamt 36 eingezeichneten und mit PNT 1 ... PNT 36 beschrifteten Punkte längs der Hüllkurve H möglich. Jeder Punkt entspricht einer 10°-Markierung längs der Abszisse in Fig. 5, entlang welcher der Umdrehungswinkel des Rades 3 bzw. der Kurbelwelle 2 für.einen 360°-Umlauf aufgetragen ist.. Der Punkt PNT 1 entspricht folglich der 0°-Vertikalen, der Punkt PNT 2 der 10°-Vertikalen, der Punkt PNT 3 der 20°-Vertikalen etc. Im vorliegenden Fall bedeutet dies, dass, wenn der Punkt PNT 1 im gezeigten Ausführungsbeispiel gemäß Fig. 2 vertikal nach unten weist, mithin also vollständig und im Wesentlichen mittig vom Zugmittel 4 umschlossen ist, eine Gegenschwingung mit maximaler Amplitude erzeugt wird, siehe Fig. 5. Mit zunehmender Drehung des Rades nimmt der Radradius ab, das heißt, die Zugmittellängung bzw. die in das Zugmittel über die Radform eingebrachte Kraft nimmt ab, folglich nimmt auch die Amplitude der Gegenschwingung ab. Im Bereich von ca. 40°-Verdrehung des Rades 3 befindet sich der Punkt PNT 5 in der untersten Position. Dieser Punkt liegt in einem Bereich mit geringem Radius, weshalb folglich die Gegenschwingungsamplitude gering ist. Bei einer weiteren Drehung des Kettenrades bis zum Punkt PNT 10 (90°-Vertikale) nimmt der Radius wiederum zu, was eine entsprechende Ausprägung im Gegenschwingungsdiagramm zur Folge hat. In entsprechender Weise kann jeder der Punkte PNT 1 - PNT 36 auf das Gegenschwingungsspektrum gemäß Fig.5 referenziert werden.

Ersichtlich ist es damit möglich, unter Verwendung nur eines unrunden Rades - hier eines Kettenrades - eine Gegenschwingung zu erzeugen, die auf der Überlagerung zweier aktiv erzeugter Hauptschwingungsordnungen - im Beispiel der dritten und vierten Ordnung - erzeugt wurde, wobei die Auslegung des Rades in Abhängigkeit des gemessenen Ist-Störschwingungsspektrums erfolgt. Hierbei ist zum einen die Amplitude der Störschwingung bzw. der Kraftschwankung zu berücksichtigen, die in die Radiusschwankungen des Rades eingeht. Die Ordnungszahl der Kraftschwankungen, ob es sich also um zu bedämpfende Störschwingungen zweiter, dritter oder vierter Ordnung etc. handelt, geht in die Unrundform ein, da abhängig von der zu bedämpfenden Ordnung die entsprechende dreieckige, viereckige, fünfeckige etc. Geometrie zu wählen und mit der Geometrie der anderen zu bedämpfenden Hauptschwingungsordnung zu überlagern ist. Schließlich geht der Phasenwinkel der Störschwingungen bzw. Kraftschwankungen zueinander, aufgelöst nach den jeweiligen Hauptschwingungsordnungen, ein, woraus die jeweiligen Drehpositionen der Unrundformen resultieren, da hierüber sichergestellt wird, dass die einzelnen Hauptschwingungsordnungen phasenkorrekt erzeugt werden, so dass das resultierte Gegenschwingungsspektrum weitestgehend dem Störschwingungsspektrum - bezogen auf die zu bedämpfenden Hauptschwingungsordnungen - entspricht.

Wie Fig. 4 ferner zeigt, ist die Auslegung der Radgeometrie derart, dass an jeder Stelle des Radumfangs ein positiver Radius gegeben ist, das heißt, der Radius wird nie negativ, es sind keine Einbuchtungen gegeben, in denen das Zugmittel - im gezeigten Beispiel wäre dies eine Kette - nicht am Rad angreifen würde. Vielmehr ist das Zugmittel in jeder Raddrehposition in maximaler möglicher Anlage bzw. Umschlingung am Rad 3 festgelegt.

### Bezugszahlen

- 1: Umschlingungstrieb
- 2: Kurbelwelle
- 3: erstes Rad
- 4: Zugmittel
- 5: Nockenwellen
- 6: Rad
- 7: Spanneinrichtung
- 8: Führungseinrichtung

- H: Hüllkurve

## Patentansprüche

1. Umschlingungstrieb (1) umfassend ein Umschlingungsmittel (4) wie einen Riemen oder eine Kette und mehrere im Umschlingungstrieb (1) integrierte, vom Umschlingungsmittel (4) umschlungene, auf Wellen (2, 5) sitzende Räder (3, 6), wobei über wenigstens eine Welle (2, 5) Störschwingung in das Umschlingungsmittel (4) des Umschlingungstrieb (1) eingebracht wird, und wobei zur Erzeugung einer Gegenschwingung wenigstens ein Rad (3) eine unrunde Form aufweist, **dadurch gekennzeichnet, dass** das unrunde Rad (3) in seiner Form derart ausgeführt ist, dass eine Gegenschwingung erzeugbar ist, die wenigstens zwei unterschiedliche Hauptschwingungsordnung der in das Umschlingungsmittel (4) des Umschlingungstriebs (1) eingebrachten Störschwingung kompensiert.

2. Umschlingungstrieb nach Anspruch 1, **dadurch gekennzeichnet, dass** die Form des Rads (3) durch Überlagerung zweier unterschiedlicher, auf die zu kompensierenden Hauptschwingungsordnungen bezogener Geometrien erhalten ist.

3. Umschlingungstrieb nach Anspruch 1 oder 2, **dadurch gekennzeichnet, dass** die Radiusveränderungen am Rad (3) in Abhängigkeit der Amplitude der Störschwingung bestimmt sind.

4. Umschlingungstrieb nach einem der vorangehenden Ansprüche, **dadurch gekennzeichnet, dass** die Form des Rads (3) in Abhängigkeit der Phasenwinkel der Amplituden der zu kompensierenden Hauptschwingungsordnungen bestimmt ist.

5. Umschlingungstrieb nach einem der vorangehenden Ansprüche, **dadurch gekennzeichnet, dass** das Rad (3) über den gesamten Umfang einen positiven Radius aufweist.

## Claims

1. Wraparound drive (1) comprising a wraparound mechanism (4) such as a belt or a chain and comprising a plurality of wheels (3, 6) which are integrated in the wraparound drive (1) and around which the wraparound mechanism (4) is wrapped and which are seated on shafts (2, 5), wherein a disturbance vibration is introduced into the wraparound mechanism (4) of the wraparound drive (1) by means of at least one shaft (2, 5), and wherein to generate a counteracting vibration, at least one wheel (3) has a non-circular shape, **characterized in that** the non-circular wheel (3) is designed in terms of its shape such that a counteracting vibration can be generated which compensates at least two different main orders of vibration of the disturbance vibration introduced into the wraparound mechanism (4) of the wraparound drive (1).

2. Wraparound drive according to Claim 1, **characterized in that** the shape of the wheel (3) is obtained by the superposition of two different geometries relating to the main orders of vibration to be compensated.

3. Wraparound drive according to Claim 1 or 2, **characterized in that** the changes in radius on the wheel (3) are determined as a function of the amplitude of the disturbance vibration.

4. Wraparound drive according to one of the preceding claims, **characterized in that** the shape of the wheel (3) is determined as a function of the phase angles of the amplitudes of the main orders of vibration to be compensated.

5. Wraparound drive according to one of the preceding claims, **characterized in that** the wheel (3) has a positive radius over the entire circumference.

## Revendications

1. Mécanisme d'entraînement à courroie (1) comprenant un moyen d'enveloppement (4) tel qu'une courroie ou une chaîne et plusieurs roues (3, 6) intégrées dans le mécanisme d'entraînement à courroie (1), enveloppées par le moyen d'enveloppement (4) et reposant sur des arbres (2, 5), une oscillation parasite étant introduite par le biais d'au moins un arbre (2, 5) dans le moyen d'enveloppement (4) du mécanisme d'entraînement à courroie (1) et pour produire une oscillation inverse, au moins une roue (3) présentant une forme non circulaire, **caractérisé en ce que** la roue non circulaire (3) a une forme telle qu'une oscillation inverse puisse être produite, laquelle compense au moins deux ordres d'oscillation principaux différents de l'oscillation parasite introduite dans le moyen d'enveloppement (4) du mécanisme d'entraînement à courroie (1).

2. Mécanisme d'entraînement à courroie selon la revendication 1, **caractérisé en ce que** la forme de la roue (3) est obtenue en superposant deux géométries différentes rapportées aux ordres d'oscillation principaux à compenser.

3. Mécanisme d'entraînement à courroie selon la revendication 1 ou 2, **caractérisé en ce que** les variations de rayon sur la roue (3) sont déterminées en fonction de l'amplitude de l'oscillation parasite.

4. Mécanisme d'entraînement à courroie selon l'une quelconque des revendications précédentes, **caractérisé en ce que** la forme de la roue (3) est déterminée en fonction de l'angle de phase des amplitudes des ordres d'oscillation principaux à compenser.

5. Mécanisme d'entraînement à courroie selon l'une quelconque des revendications précédentes, **caractérisé en ce que** la roue (3) présente sur toute sa périphérie un rayon positif.
